# EUROPÄISCHE PATENTSCHRIFT

(11) **EP 0 346 893 B1**
(45) Veröffentlichungstag und Bekanntmachung des Hinweises auf die Patenterteilung: **13.10.1993**
(21) Anmeldenummer: 89110876.3
(22) Anmeldetag: 15.06.1989
(51) Int. Cl.: F23G 7/06, B01D 53/34

(54) **Vorrichtung zur Reinigung von Abgasen aus CVD-Prozessen**
Apparatus for purifying exhaust gases emitted in CVD processes
Dispositif pour purifier des gaz d'échappement d'un procédé CVD

(30) Priorität: 15.06.1988 DD 316789
(43) Veröffentlichungstag der Anmeldung: 20.12.1989
(73) Patentinhaber: CENTROTHERM ELEKTRISCHE ANLAGEN GMBH + CO., 89143 Blaubeuren (DE)
(72) Erfinder: Krödel, Gunter, Dipl.-Ing., O-8080 Dresden (DE); Fabian, Lutz, Dr. rer. nat., O-8020 Dresden (DE); Möller, Rainer, Dr.-Ing., O-8023 Dresden (DE); Stelzer, Horst, Dipl.-Chem., O-8080 Dresden (DE); Gildemeister, Frank, O-8080 Dresden (DE)

(56) Entgegenhaltungen:
- EP-A- 0 166 846
- EP-A- 0 231 543
- DE-A- 3 326 647
- US-A- 2 889 002
- US-A- 3 660 045
- US-A- 3 702 756

## Beschreibung

Die Erfindung betrifft eine Vorrichtung zur Reinigung von Abgasen aus CVD-Prozessen, insbesondere aus Anlagen zur chemischen Bearbeitung von Halbleitersubstraten für die Herstellung mikroeletronischer Bauelemente mittels Niederdruckprozessen, mit wenigstens einem Reaktionsraum und Mitteln zur Zuführung des Abgases sowie Oxidations- und Sorptionsmitteln.

Vorrichtungen zur Abgasreinigung sind bereits in großer Vielzahl bekannt. Sie sind immer den konkreten Vorrichtungen und zugrundeliegenden Verfahren, bei denen die entsprechenden Abgase entstehen, angepaßt.

Schadstoffe aus Normaldruckprozessen können zweckmäßig mit nach dem Waschprinzip arbeitenden Vorrichtungen, z. B. mit Sprühtürmen, Kolonnen, Venturiwäschern und einem geeigneten Sorptionsmittel gereinigt werden. Diesen Vorrichtungen haftet der generelle Nachteil an, daß mit ihnen Abgase aus Niederdruckprozessen, die im allgemeinen sehr feindisperse und beständige Aerosole enthalten und insbesondere durch die Anwesenheit von Öldämpfen, die aus Vakuumpumpen stammen, chemisch nur wenig beeinflußbar sind, nicht in wirksamer Weise gereinigt werden können.

Es sind ferner Vorrichtungen bekannt, bei denen oxidierbare Abgasbestandteile verbrannt werden. Dies geschieht im allgemeinen durch Zuführung von Zusatzenergie. Diese herkömmlichen Vorrichtungen haben den Nachteil, daß staubförmige Abgasbestandteile und feste Oxidationsprodukte, die bei der Verbrennung anfallen, in den Abgasen enthalten bleiben, die als nur chemisch veränderte Aerosole zu einer unerwünschten Umweltbelastung führen.

Es sind auch Vorrichtungen bekannt, in denen Abgase durch Verbrennung und einer anschließenden Wäsche gereinigt werden.

So wird beispielsweise in der Vorrichtung nach US-A-2889002 die Oxidation des Abgases an einem oder mehreren Rosten durchgeführt, dem eine oder mehrere Wasch-/Kühlstrecken nachgeschaltet sind. Nachteilig bei dieser Vorrichtung ist, daß sie nach unten für die Zuführung des für die Erhitzung der Roste notwendigen Luftsauerstoffes offen ist und so eine unzulässige Gefährdung des Bedienpersonals durch die zu entsorgenden toxischen Substanzen und Substanzgemische bei dem vorgesehenen Einsatzzweck eintreten kann. Außerdem ist der Auswasch- bzw. Kühleffekt gering, da diese Vorrichtung keinen intensiven Kontakt zwischen Waschflüssigkeit und Abgas garantiert.

Bei der Vorrichtung nach US-A-3660045 erfolgen die Verbrennung und das Auswaschen großer Mengen Rauchgase bei möglichst geringem Druckabfall. Deshalb werden große Querschnitte und ein kostenaufwendiges, kompliziertes System mit verschiedenen Prall- und Reflexionsflächen eingesetzt. Diese Vorrichtung weist den Mangel auf, daß sie für die vorgesehene Entsorgung relativ kleiner Abgasmengen nicht effektiv eingesetzt werden kann.

Vorrichtungen, bei denen eine katalytische Nachverbrennung durchgeführt wird, sind für den vorliegenden Anwendungszweck nicht einsetzbar, da viele Verbindungen, die in den Abgasen der zugrundegelegten Prozesse enthalten sind, insbesondere auch die Öle, Katalysatorgifte darstellen, welche entsprechende Vorrichtungen nach kurzer Zeit unbrauchbar machen.

Vorrichtungen zur Plasmapyrolyse von Schadstoffen sind ferner unvorteilhaft, da, abgesehen von dem aufgrund der zu erzeugenden hohen Temperaturen des Plasmabrenners hohen technischen und energetischen Aufwand, Stickoxide als neue, die Umwelt erheblich belastende Schadstoffe entstehen.

Der Erfindung liegt die Aufgabe zugrunde, eine Vorrichtungskonzeption zur Reinigung von Abgasen aus CVD-Prozessen, insbesondere aus Anlagen zur chemischen Bearbeitung von Halbleitersubstraten für die Herstellung mikroelektronischer Bauelemente mittels Niederdruckprozessen, anzugeben, mit der die anfallenden Abgase schadstoffrei umgesetzt werden können, so daß keine Gefährdung für Menschen und Umwelt entsteht. Die Vorrichtung soll ferner einfach aufgebaut und wirtschaftlich zu betreiben sein.

Die Aufgabe wird gemäß Anspruch 1 gelöst. Die abhängigen Ansprüche betreffen vorteilhafte Ausführungsformen der erfindungsgemäßen Vorrichtung.

Die erfindungsgemäße Vorrichtung ist gekennzeichnet durch
(a) eine Vorrichtung, die einen nach unten im wesentlichen geschlossenen und oben offenen Grundkörper mit kreisförmigem Querschnitt aufweist, der eine zylindrische Außenwand und eine davon beabstandet, konzentrisch angeordnete zylindrische Innenwand aufweist;
(b) einen Brenner, dessen Düsenende von unten in den Grundkörper hineinragt, im Zentrum des Grundkörpers angeordnet ist, wobei der Brenner eine Brenngaszuführung sowie eine Abgaszuführung aufweist, die gemeinsam in den Brenner münden;
(c) einen äußeren Kreisringraum, der durch die Außenwand und die Innenwand und einen inneren Kreisringraum, der durch die Innenwand und den Brenner gebildet werden;
(d) die Außenwand und die Innenwand, die sich nach oben durch eine zylindrische obere Außenwand bzw. eine zylindrische obere Innenwand fortsetzen, wobei die obere Innenwand eine innenliegende Brennkammer umgibt;
(e) einen kegelförmigen Spritzschutz, der zur Oberkante der oberen Innenwand mit Abstand angeordnet ist und die obere Innenwand dachförmig überdeckt, so daß ein kreisringförmiger Austrittsspalt gebildet wird;
(f) den Spritzschutz, der an seinem der oberen Außenwand zugewandten größten Umfang einen Bürstenrand aufweist, der mit der Innenseite der oberen Außenwand ringförmig vollflächig oder linienförmig in Kontakt steht;
(g) eine oberhalb des Spritzschutzes und von ihm mit Abstand angeordnete Sprühdüse zum Versprühen eines flüssigen Sorptionsmittels , wobei die Sprühdüse zur Erzeugung eines auf den Spritzschutz gerichteten hohlen Sprühkegels ausgelegt ist; und
(h) einen im Boden des Grundkörpers im Bereich des äußeren Kreisringraumes vorgesehenen Abflusses.

Nach einer bevorzugten Ausführungsform ist der im Boden des Grundkörpers vorgesehene Abfluß so unterhalb der Innenwand angeordnet, daß er sowohl im Bereich des äußeren Kreisringraumes mit einer radial äußeren Abflußöffnung als auch im Bereich der Brennkammer bzw. des um den Brenner liegenden inneren Kreisringraumes mit einer radial inneren Abflußöffnung mündet, so daß beide Kreisringräume mit dem Abfluß in Verbindung stehen; die Innenwand weist ferner im Bodenbereich eine oder mehrere radiale Öffnungen auf, welche die Brennkammer bzw. den inneren Kreisringraum mit dem äußeren Kreisringraum verbinden. Insbesondere dann, wenn, in der Draufsicht auf die erfindungsgemäße Vorrichtung, die radialen Öffnungen der Innenwand gegenüber der Position des Abflusses winkelversetzt sind, lassen sich besonders vorteilhafte Spüleffekte realisieren, wie später näher erläutert ist.

Die erfindungsgemäße Vorrichtung weist ferner vorzugsweise auf der Höhe der Sprühdüse oder oberhalb davon eine Verbindungseinrichtung auf, insbesondere einen Flansch, mit der sie mit einer Ablufteinrichtung oder einer lufttechnischen Anlage (LTA) verbindbar ist.

Weitere vorteilhafte Ausführungsformen der erfindungsgemäßen Vorrichtung weisen in Höhe der Austrittsöffnung des Brenners bzw. seines Düsenendes oder darüber eine in die Brennkammer hineinragende Zündelektrode auf, mit der eine besonders leichte Zündung des Brenngasgemisches ermöglicht wird.

Es ist ferner vorteilhaft, wenn in Höhe der Austrittsöffnung des Brenners bzw. des Düsenendes oder darüber vorzugsweise radial angeordnete Zuführungen für Zusatzgas vorgesehen sind, wodurch sich das Brennverhalten der Vorrichtung vorteilhaft beeinflussen läßt.

Ferner können vorteilhafterweise Kontrolleinrichtungen vorgesehen sein, die von außen in den inneren Kreisringraum bzw. in die Brennkammer hineinragen, bevorzugt über Durchführungen.

Die Vorrichtung wird günstigerweise mit einem Gemisch aus Sauerstoff und Wasserstoff, d. h. einem Knallgasgemisch, betrieben.

Ferner ist eine Auslegung der Vorrichtung für die Verwendung von Wasser als Sorptionsmittel besonders günstig.

Das in die in der Brennkammer brennende Flamme eingespeiste Abgas wird dort oxidiert. Dabei kann die Abgaszuführung in die
Brennkammer münden; sie ist vorteilhaft mit der Brenngaszuführung integriert und mündet zusammen mit der Brenngaszuführung in den Brenner ein. Das bei den Verbrennungsreaktionen gebildete Gas-Festkörper-Aerosol strömt durch den Austrittsringspalt zwischen dem oberen Ende der Brennkammer bzw. dem oberen Ende der oberen Innenwand und dem kegelförmigen Spritzschutz in den Raum zwischen Brennkammer und oberen Außenwand der Vorrichtung, von wo es durch den mit Sorptionsmittel benetzten Bürstenrand in den hohlen Sprühkegel des Sorptionsmittel gelangt, das von der Sprühdüse versprüht wird, wobei das Gas-Festkörper-Aerosol von den festen wie auch von den im Sorptionsmittel löslichen Bestandteilen gereinigt wird. Das so gereinigte Abgas wird durch eine an die Vorrichtung angeschlossene geeignete Einrichtung, wie eine Abluftleitung oder eine lufttechnische Anlage, abgesaugt.

Das von der Sprühdüse insbesondere hohlkegelförmig versprühte Sorptionsmittel gelangt auf die Innenseite der oberen Außenwand, benetzt den Bürstenrand des Spritzschutzes und läuft als gleichmäßiger Film an den Innenseiten der oberen und der unteren Außenwand nach unten ab.

Durch die erfindungsgemäße Anordnung eines Bürstenrandes am Umfang des Spritzschutzes, wobei der Bürstenrand sich bis zur oberen Außenwand erstreckt, wird einerseits der Kontakt zwischen dem Sorptionsmittel und den Verbrennungsgasen verbessert und andererseits verhindert, daß Sorptionsmittel in die Brennkammer spritzt und den Verbrennungsprozeß negativ beeinflußt.

Das herabfließende Sorptionsmittel gelangt in den äußeren Kreisringraum zwischen der Außenwand und der Innenwand der Vorrichtung und von dort in den im Bodenbereich der Vorrichtung vorgesehenen Abfluß.

Wenn nach einer bevorzugten Ausführungsform der Abfluß so unterhalb der Innenwand angeordnet ist, daß er sowohl im äußeren als auch im inneren Kreisringraum mündet, und die Innenwand im unteren Bereich radiale Durchgangsöffnungen aufweist, gelangt das zunächst im äußeren Kreisringraum herabfließende Sorptionsmittel durch die radialen Öffnungen der Innenwand zum Teil auch in den unteren Bereich der Brennkammer bzw. den inneren Kreisringraum um den Brenner herum, wo es von der Verbrennung herrührende feste Oxidationsprodukte der Abgasverbrennung ausschwemmt und über die radial innere Abflußöffnung abfließt.

Insbesondere dann, wenn die radialen Öffnungen in der Innenwand gegenüber dem in beide Kreisringräume mündenden Abfluß winkelversetzt sind, tritt ein günstiger Ausschwemmeffekt der festen Oxidationsprodukte bzw. Festbestandteile des verbrannten Abgases aus der Brennkammer auf.

Die Erfindung wird im folgenden anhand eines vorteilhaften Ausführungsbeispieles unter Bezug auf die Zeichnungen näher erläutert; es zeigen:
- Fig. 1:: Einen Längsschnitt durch eine erfindungsgemäße Vorrichtung
und
- Fig. 2:: einen Radialschnitt durch die Vorrichtung von Fig. 1 oberhalb des Brenners.

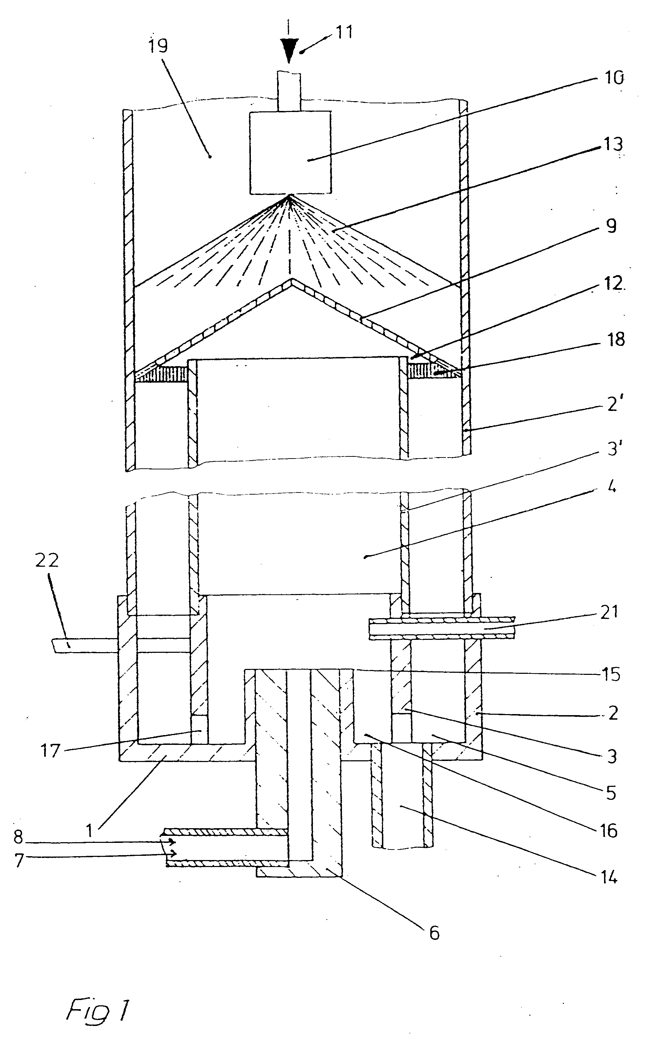

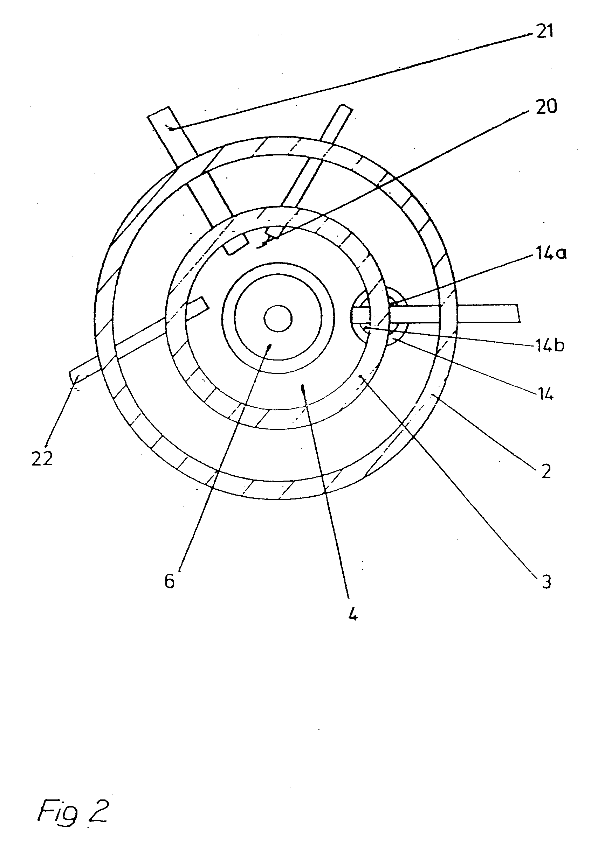

Die in Fig. 1 dargestellte Vorrichtung umfaßt einen Grundkörper 1, in dem in einem Abstand von seiner Außenwand 2 eine konzentrische Innenwand 3 vorgesehen ist, die eine innenliegende Brennkammer 4 sowie einen konzentrischen äußeren Kreisringraum 5 vorgibt. Bei der in Fig. 1 dargestellten Ausführungsform erstrecken sich die Außenwand 2 und die Innenwand 3 nicht über die gesamte Höhe der Vorrichtung bis zu deren oberem Ende, sondern setzen sich nach oben in einer oberen Außenwand 2' bzw. einer oberen Innenwand 3' fort. Durch diese Ausführungsform ergeben sich erhebliche funktionelle und insbesondere produktionstechnische Vorteile. Der Brenner 6 weist bei der vorliegenden Ausführungsform eine Brenngaszuführung 7 sowie eine Abgaszuführung 8 auf, die gemeinsam in den Brenner 6 münden. Die Vorrichtung weist ferner, wie auch aus Fig. 2 hervorgeht, eine Zuführung 21 für Zusatzgas sowie eine Durchführung für eine Kontrolleinrichtung 22 auf. Über der Brennkammer 4 und vom oberen Ende der oberen Innenwand 3' beabstandet, ist ein kegelförmig ausgebildeter Spritzschutz 9 angeordnet, der die Brennkammer 4 dachförmig überragt, wobei ein Austrittsspalt 12 zwischen dem oberen Ende der oberen Innenwand 3' und dem Spritzschutz 9 gebildet ist, durch den das verbrannte Abgas und die Verbrennungsabgase hindurchströmen. Oberhalb des Spritzschutzes 9 und von ihm beabstandet ist eine Sprühdüse 10 angeordnet, mit der das flüssige Sorptionsmittel 11 von oben auf die Innenseite der oberen Außenwand 2' in einem hohlen Sprühkegel 13 aufgesprüht wird. Im Boden des Grundkörpers 1 ist im Bereich des äußeren Kreisringraumes 5 und des inneren Kreisringsraumes 16 ein Abfluß 14 vorgesehen, der unterhalb der Innenwand 3 so angeordnet ist, daß sich eine radial äußere Abflußöffnung 14a (vgl. Fig. 2) für den äußeren Kreisringraum 5 und eine radial innere Abflußöffnung 14b, die sich zum inneren Kreisringraum 16 bzw. zur Brennkammer 4 öffnet, ergibt. Die Innenwand 3 weist im Bodenbereich mehrere radiale Öffnungen 17 auf, welche die Brennkammer 4 bzw. den inneren Kreisringraum 16 mit dem äußeren Kreisringraum 5 verbinden.

Durch die Anordnung eines Bürstenrandes 18 am Umfang des Spritzschutzes 9, wobei der Bürstenrand sich bis zur oberen Außenwand 2' erstreckt, wird einerseits der Kontakt zwischen dem Sorptionsmittel 11 und den Verbrennungsgasen verbessert und andererseits verhindert, daß Sorptionsmittel 11 in die Brennkammer 4 spritzt und den Verbrennungsprozeß negativ beeinflußt.

Durch die konzentrische Anordnung des Brenners 6, der Innenwand 3, der Außenwand 2, der oberen Inneanwand 3', der oberen Außenwand 2', des Spritzschutzes 9 sowie der Sprühdüse 10 ergeben sich bei der in den Figuren 1 und 2 dargestellten Ausführungsform ebenfalls funktionelle wie produktionstechnische Vorteile.

Die in den Figuren 1 und 2 dargestellte erfindungsgemäße Vorrichtung weist ferner eine Zündelektrode 20 sowie eine Zuführung 21 für Zusatzgas auf, ferner eine Durchführung für eine Kontrolleinrichtung 22, die sämtlich in die Brennkammer 4 hineinragen.

Die Vorrichtung ist vorteilhaft für die Verwendung von Wasser als Sorptionsmittel ausgelegt.

Die erfindungsgemäße Vorrichtung führt zu einer Reihe von Vorteilen: Besonders günstig ist, daß gleichzeitig mit der Abgasreinigung und -entgiftung auch eine Beseitigung von Pumpenölrückständen stattfindet; die Vorrichtung ist ferner einfach aufgebaut und damit auch wirtschaftlich herzustellen und zu betreiben. Aufgrund ihrer kompakten Konzeption und damit ihres geringen Raumbedarfs ist sie ferner leicht in vorhandene abgas- bzw. lufttechnische Anlagen integrierbar und an solche Einrichtungen anpaßbar. Außerdem führt die kompakte Bauweise zusammen mit der speziellen aerodynamischen Führung der Gase zu einem besonders intensiven Reinigungseffekt.

## Patentansprüche

1. Vorrichtung zur Reinigung von Abgasen aus CVD-Prozessen, insbesondere zur Reinigung von Abgasen aus Anlagen zur chemischen Bearbeitung von Halbleitersubstraten für die Herstellung mikroelektronischer Bauelemente mittels Niederdruckprozessen, mit wenigstens einem Reaktionsraum und Mitteln zur Zuführung des Abgases sowie Oxidations- und Sorptionsmitteln,
gekennzeichnet durch
(a) eine Vorrichtung, die einen nach unten im wesentlichen geschlossenen und oben offenen Grundkörper (1) mit kreisförmigem Querschnitt aufweist, der eine zylindrische Außenwand (2) und eine davon beabstandet, konzentrisch angeordnete zylindrische Innenwand (3) aufweist;
(b) einen Brenner (6), dessen Düsenende (15) von unten in den Grundkörper (1) hineinragt, im Zentrum des Grundkörpers (1) angeordnet ist, wobei der Brenner (6) eine Brenngaszuführung (7) sowie eine Abgaszuführung (8) aufweist, die gemeinsam in den Brenner (6) münden;
(c) einen äußeren Kreisringraum (5), der durch die Außenwand (2) und die Innenwand (3) und einen inneren Kreisringraum (16), der durch die Innenwand (3) und den Brenner (6) gebildet werden;
(d) die Außenwand (2) und die Innenwand (3), die sich nach oben durch eine zylindrische obere Außenwand (2') bzw. eine zylindrische obere Innenwand (3') fortsetzen, wobei die obere Innenwand (3') eine innenliegende Brennkammer (4) umgibt;
(e) einen kegelförmigen Spritzschutz (9), der zur Oberkante der oberen Innenwand (3') mit Abstand angeordnet ist und die obere Innenwand (3') dachförmig überdeckt, so daß ein kreisringförmiger Austrittsspalt (12) gebildet wird;
(f) den Spritzschutz (9), der an seinem der oberen Außenwand (2') zugewandten größten Umfang einen Bürstenrand (18) aufweist, der mit der Innenseite der oberen Außenwand (2') ringförmig vollflächig oder linienförmig in Kontakt steht;
(g) eine oberhalb des Spritzschutztes (9) und von ihm mit Abstand angeordnete Sprühdüse (10) zum Versprühen eines flüssigen Sorptionsmittels (11) , wobei die Sprühdüse (10) zur Erzeugung eines auf den Spritzschutz (9) gerichteten hohlen Sprühkegels ausgelegt ist; und
(h) einen im Boden des Grundkörpers (1) im Bereich des äußeren Kreisringraumes (5) vorgesehenen Abflusses (14).

2. Vorrichtung nach Anspruch 1 dadurch gekennzeichnet, daß
- der im Boden des Grundkörpers (1) vorgesehene Abfluß (14) so unterhalb der Innenwand (3) angeordnet ist, daß er sowohl im Bereich des äußeren Kreisringraumes (5) mit einer radial äußeren Abflußöffnung (14a) als auch im Bereich der Brennkammer (4) bzw. des inneren Kreisringraumes (16) um den Brenner (6) mit einer radial inneren Abflußöffnung (14b) mündet,
und
- die Innenwand (3) im Bodenbereich eine oder mehrere radiale Öffnungen (17) aufweist, welche die Brennkammer (4) bzw. den inneren Kreisringraum (16) mit dem äußeren Kreisringraum (5) verbinden.

3. Vorrichtung nach Anspruch 2, gekennzeichnet dadurch, daß die radialen Öffnungen (17) gegenüber dem Abfluß (14) winkelversetzt sind.

4. Vorrichtung nach einem der Ansprüche 1 bis 3, gekennzeichnet dadurch, daß sie am oberen Ende der oberen Außenwand (2') in Höhe der Sprühdüse (10) oder oberhalb davon einen Flansch (19) zur Verbindung mit einer Ablufteinrichtung oder einer lufttechnischen Anlage aufweist.

5. Vorrichtung nach einem der Ansprüche 1 bis 4, gekennzeichnet dadurch, daß sie in Höhe der Austrittsöffnung des Brenners (6) bzw. von dessen Düsenende (15) eine in die Brennkammer (4) hineinragende Zündelektrode (20) aufweist.

6. Vorrichtung nach einem der Ansprüche 1 bis 5, gekennzeichnet dadurch, daß sie in Höhe der Austrittsöffnung des Brenners (6) bzw. des Düsenendes (15) oder darüber vorzugsweise radial angeordnete Zuführungen (21) für Zusatzgas und/oder Kontrolleinrichtungen (22) aufweisen.

7. Vorrichtung nach einem der Ansprüche 1 bis 6, gekennzeichnet dadurch, daß sie für die Verwendung von Wasser als Sorptionsmittel ausgelegt ist.

8. Vorrichtung nach einem der Ansprüche 1 bis 7, gekennzeichnet dadurch, daß sie für die Verwendung eines Gemisches von Wasserstoff und Sauerstoff als Brenngas ausgelegt ist.

## Claims

1. Device for cleaning waste gases from chemical vapour deposition processes in particular from facilities used for the chemical processing of semi-conductor substrates for the manufacture of micro-electronic components using low pressure processes with at least one reaction chamber and means for feeding in the waste gas and oxidizing and absorption agents.
The characteristic features are as follows.
(a) A device which has a basic structure (1) of circular cross-section which is for the most part closed at the bottom and open at the top and has a cylindrical outer wall (2) and a concentric cylindrical inner wall (3) with a space between them.
(b) A burner (6) with its jet (15) protruding into the centre of the basic structure from below (1). The burner (6) has a fuel gas feed (7) and waste gas feed (8) which are both channelled into the burner (6)
(c) An outer annular space (5) formed by the outer wall (2) and inner wall (3) and an inner annular space (16) formed by the inner wall (3) and the burner (6)
(d) The outer wall (2) and the inner wall (3) are extended at the top by a cylindrical upper outer wall (2') and a cylindrical upper inner wall (3'), the upper inner wall (3') surrounds an inner combustion chamber (4)
(e) A conical spray guard (9) is located at a distance from the upper rim of the upper inner wall (3') and covers over the upper inner wall (3') thus forming an annular outlet gap (12)
(f) The spray guard (9) which has a brush edge (18) at its widest circumference facing the upper outer wall (2') which is in contact with the inner side of the upper outer wall (2').
(g) A spray nozzle (10) located above the spray guard (9) and at a distance from it for spraying a liquid sorption agent (11), with wide dispersion on the spray guard (9)
(h) A drain (14) in the base of the basic structure (1) near the outer annular space (5)

2. Device as claim 1. Other and further characteristics are as follows.
The drain (14) in the base of the basic structure (1) is located below the inner wall (3) in such a way that it joins with a radial outer drain aperture (14a) in the area of the outer annular space (5) and also with a radial inner drain aperture (14b) in the area of the combustion chamber (4) or inner annular space (16) around the burner (6)
The inner wall (3) in the area of the base has one or more radial apertures (17) which connect the combustion chambers (4) and the inner annular space (16) with the outer annular space (5).

3. Device as claim 2. Other and further characteristics are as follows.
The radial apertures (17) are set at an angle to the drain (14).

4. Device as per one of claims 1 to 3. Other and further characteristics are as follows.
The device has a flange (19) at the upper end of the upper external wall (2') at the level of the spray nozzle (10) or above it for connection to a ventilation or pneumatic system.

5. Device as per one of claims 1 to 4. Other and further characteristics are as follows.
The device has a starting electrode (20) protruding into the combustion chamber (4) at the level of the burner aperture (6) or its nozzle (15).

6. Device as per one of claims 1 to 5. Other and further characteristics are as follows.
The device has - preferably radial - inlets (21) for extra gas and / or monitoring systems (22) located at the level of the burner aperture (6) / nozzle (15) or above it.

7. Device as per one of claims 1 to 6. Other and further characteristics are as follows.
The device is designed for use with water as a sorption agent

8. Device as per one of claims 1 to 7. Other and further characteristics are as follows.
The device is designed for use with a hydrogen and oxygen mixture fuel gas

## Revendications

1. Appareil pour le nettoyage des gaz d'échappement provenant de procédés de coupure chimique de vapeur, particulièrement pour le nettoyage des gaz d'échappement provenant d'installations de traitement chimique de substrats de semiconducteurs pour la fabrication d'éléments de construction microélectroniques au moyen de procédés à basse pression, avec au moins un espace de réaction et des agents pour l'amenée du gaz d'échappement ainsi que des agents d'oxydation et de sorption,
caractérisé par
(a) un appareil qui présente un corps de base (1) à section transversale circulaire, essentiellement fermé vers le bas et ouvert en haut, et qui présente une paroi externe cylindrique (2) et une paroi interne cylindrique (3) qui en est écartée et qui est disposée de façon concentrique;
(b) un brûleur (6) dont le côté pulvérisateur (15) pénètre dans le corps de base (1) par-dessous et se trouve au centre du corps de base (1), ce qui fait que le brûleur (6) présente une amenée des gaz combustibles (7) ainsi qu'une amenée des gaz d'échappement (8), qui débouchent ensemble dans le brûleur (6);
(c) un espace circulaire externe (5) formé par la paroi externe (2) et la paroi interne (3) et un espace circulaire interne (16) formé par la paroi interne (3) et le brûleur (6);
(d) la paroi externe (2) et la paroi interne (3) qui se prolongent vers le haut par une paroi externe supérieure cylindrique (2') et une paroi interne supérieure cylindrique (3'), et la paroi interne supérieure (3') enveloppe une chambre de combustion (4) située à l'intérieur;
(e) un carter de protection conique (9) qui est monté avec un espace sur le bord supérieur de la paroi interne supérieure (3') et qui recouvre la paroi interne supérieure (3') à la façon d'un toit, de manière à former une fente de sortie circulaire (12);
(f) le carter de protection (9), dont le plus grand périmètre tourné vers la paroi externe supérieure (2') présente un bord équipé d'une brosse (18) qui est en contact, sur toute la surface en forme d'anneau ou en forme de ligne, avec la face interne de la paroi externe supérieure (2');
(g) un pulvérisateur (10) situé au-dessus du carter de protection (9) et écarté de lui, pour pulvériser un agent de sorption liquide (11), le pulvérisateur (10) étant étudié pour produire un cône de projection creux dirigé vers le carter de protection (9); et
(h) un écoulement (14) prévu sur le fond du corps de base (1), dans la zone de l'espace circulaire externe (5).

2. Appareil selon la spécification, 1 caractérisé par le fait que
. l'écoulement (14) prévu sur le fond du corps de base (1) soit placé sous la paroi interne (3) de sorte qu'il débouche aussi bien dans la zone de l'espace circulaire externe (5), avec une bonde radiale externe (14a), que dans la zone de la chambre de combustion (4) et dans l'espace circulaire interne (16) autour du brûleur (6) avec une bonde radiale interne (14b),
et
. que la paroi interne (3) dans la zone du fond présente une ou plusieurs ouvertures radiales (17) qui relient la chambre de combustion (4) et l'espace circulaire interne (16) avec l'espace circulaire externe (5).

3. Appareil selon la spécification 2, caractérisé par le fait que les ouvertures radiales (17) soient décalées en angle par rapport à l'écoulement (14).

4. Appareil selon une des spécifications 1 à 3, caractérisé par le fait qu'il présente une bride (19) située dans la partie supérieure de la paroi externe supérieure (2') au niveau ou au-dessus du pulvérisateur (10), et destinée au raccord avec un dispositif d'évacuation d'air ou une installation d'aérage.

5. Appareil selon une des spécifications 1 à 4, caractérisé par le fait qu'il présente, au niveau de l'orifice de sortie du brûleur (6) ou de son côté pulvérisateur (15), une électrode d'amorçage (20) pénétrant dans la chambre de combustion (4).

6. Appareil selon une des spécifications 1 à 5, caractérisé par le fait qu'il présente, au niveau de l'orifice de sortie du brûleur (6) ou de son côté pulvérisateur (15) ou au-dessus si l'on préfère, des amenées (21) pour un gaz d'appoint, disposées radialement, et/ou des dispositifs de contrôle (22).

7. Appareil selon une des spécifications 1 à 6, caractérisé par le fait qu'il soit étudié pour l'utilisation de l'eau comme agent de sorption.

8. Appareil selon une des spécifications 1 à 7, caractérisé par le fait qu'il soit étudié pour l'utilisation d'un mélange d'hydrogène et d'oxygène comme gaz combustible.
